# EUROPEAN PATENT APPLICATION

(11) **EP 2 361 496 A1**
(43) Date of publication of application: **31.08.2011**
(21) Application number: 11156127.0
(22) Date of filing: 28.02.2011
(51) Int. Cl.: A01G 3/04, A01G 17/02

(54) **Combined, bilateral, adjustable agricultural tool platform**

(30) Priority: 28.02.2010 IT MN20100003
(71) Applicant: Guerrieri Gonzaga, Edoardo, 46030 Sustinente (Mantova) (IT); Guerrieri Gonzaga, Aliana, 20129 Milano (IT)
(72) Inventor: Guerrieri Gonzaga, Edoardo, 46030, Sustinente (Mantova) (IT)
(74) Representative: Gustorf, Gerhard

(57) **Abstract**

The proposed invention consists of a standardized tool-holding platform, capable to be fitted onto vehicles operating between rows vineyards, orchards, nurseries and hedges and designed for the support and management of equipment carrying out simultaneously or at different times defence, fertilization and maintenance operations on the tree row soil, trunks or foliages; in particular it is capable to detect tree misalignments or obstacles, provide the relevant signals and/or perform or control overcoming activities without stopping the job. The platform incorporates a basic structure with sensors and direct drivers relevant to the tree row free width and can be equipped with sensors, electronic circuits, functional connections, various controls and drivers also depending on the operations to be carried out.

## Description

The invention proposed and defined as "standardized lifting bilateral tool-holding platform" basically consists of a centralized structure suitable to support various tools and handle operations on row-arranged trees and hedges and capable to be fitted onto vehicles driving through the tree rows; the device incorporates hydraulic components to lift, widen/approach different operating units fitted onto the standardized support and connecting plates placed on one or preferably both sides, a group for the distribution of inputs and power feed to the electric and/or oleo-dynamic operating units of the supported devices (i.e. trimmers, leaf strippers, side-shoots removing units, spraying units, sensors, electric valves, etc.), as well as for the connection of the same to the vehicle power generation groups (i.e. oleo-dynamic pumps, electric batteries), and to the distribution controls handled by the operator and/or by automation devices managed by an electronic cabinet, which can be variably developed (i.e. memorizers, programmers, processors, PLC, etc.), meaning that it can be suitable to receive signals from the sensors / evaluate / decide / start up / control the performance of the job and thus obtain a completely or partially automated correct job.

The basic geometric parameters are the following: the height positioning of the operating units, the width between the tree rows, the possible transversal inclinations of the trees with respect to the surface being driven through by the vehicle, the possible programmed asymmetries between trunks and foliages in case of vineyards. The above is completed by trunks imperfections, particularly in the vineyards featured by a natural sarmentose shape, the need to operate close to the trunks or even interfering with the foliage and the presence of unforeseen obstacles, which call for the need to have prompt and reliable safety devices to avoid damages to the tools and/or the trees.

The management "at sight" by the operator, who is already driving the vehicle, shows physical and attention limits; therefore, in order to increase the operating capacity, it is necessary to work on several tree rows at a time (two or multiple tree row devices) and on both sides (bifacial equipment) preferring the automation of one or more functions, based on productivity, cost-saving and functionality criteria: the above explains the advantages deriving from the definition for "that specific operation" in "that vineyard" of the more constant geometric parameters, such as working height and width, foliage height and thickness, width between the tree rows, the "standard" values, as well as the acceptable limits (variations from standard) before performing corrections, and, since the designing phase, from the adoption of suitable "sensors" to detect the distances to be respected and of automation devices capable to react either by sending proper information to the operator, or by autonomously varying the operating unit positioning and then controlling their return to the original position when overcoming the anomaly, in case it is of a temporary nature, or requiring a variation of the "standard" position in case of long-lasting anomaly detection (i.e. a tree row getting narrow).

Given the several types of operations to be carried out during vegetation and before harvesting and the various types of equipment involved, incorporating single motorized units (i.e. trimmers) or simple product distributors (i.e. sprayers), the advantages to have standardized supports, a central platform including the connections to the operating units and a "brain" (electronic cabinet) controlling the automated functions, which are no longer performed by the operator are clear and the device proposed, considering the various aspects, seems to be the most convenient one.

At present there are neither standardized bilateral tool-holding platforms suitable to support and handle units performing the above mentioned operations, nor standardized support plates, two-row bifacial devices overlaying tree rows, besides spraying foliages, nor sensor applications for the automation of the operating functions. Given the complexity and variety of the subjects and solutions involved, only the basic elements featuring the proposed invention, i.e. the direct applications to the platform and the possible utilizations, are herewith described and illustrated, whereas for its further development it should be referred to specific inventions, as it is the case for the "intelligences" (electronic cabinets), whose solutions depend on the foreseen automation levels.

The working modes of the operating units can be grouped as follows: 1) Single tree row - mono-facial, 2) Double tree row mono-facial, 3) Single tree row - bifacial with tree row overlaying, 4) Double or multiple tree row - bifacial mode with the overlaying of at least two adjacent tree rows; the main types of the operations mentioned above can be instead summarized as follows:
a) operations as per modes 1-2-3-4 above, such as spraying at the row foot or on the trunks, side-shoots removal, trimming, sub-foliage cleaning;
b) operations as per modes 1-2 above due to technical and/or cost saving reasons, such as leaf removal, soil tilling, grass field shredding and possibly its mulching, limit detection, i.e. sensors to detect the distance of the operating units from the trunks, transversal inclinations and obstacles, in particular close to the ground.

The proposed invention permits the adoption of the most convenient and productive solutions, i.e. mode 4 for type a) operations and mode 2 for b) type ones. It is not dealt here with the devices for operations requiring the interposition of jointed arms to support and position the same, such as the tree row overlaying ones (modes 3,4), or those calling in any case for the inclination management, even though not overlaying the tree rows, i.e. modes 1 and 2, such as trimming and leaf stripping units.

It is therefore described here the basic platform along with its supports for the distance sensors and for the operating units directly fitted onto the standardized supporting plate. The foreseen sensors are placed ahead of the operating units and fixed either to the pistons of the same tool-holding platform or to their own platform, as called for in case of tree row overlaying units; they are basically of two different types:
a) trunk contact sensors (detectors) consisting of hinged levers ending preferably with a small wheel or a vertical axis roller, both free to rotate, so as to avoid damaging the vine bark, and suitable to control the retreat of the operating unit either directly, or by means of either a hydraulic piston plus reversing valve, or of an electronic cabinet - as an alternative they can consists of a flexible element electrically sending a signal to the operator and/or the control cabinet -
b) sensors with no physical contact: optical detectors (for ex. telecameras) reflecting various kinds of waves (for ex. light waves in case of photocells, radar, sonar, etc.), or other forces (for ex. magnetism) and capable to detect and/or signal the presence and/or distance from trunks.

It is stressed here, as it is a basic element of the invention, the "standard" position foreseen for each type of equipment/tree planting, as well as the "neutral" or tolerance zone for each side: only when exceeding the same the sensors send signals to the operator and/or control the proportional or pre-set "retreat" of the units. In case of bifacial equipment (overlaying tree rows) and mono-facial sensors (on the inner side of the tree row), the electronic cabinet, depending on the solutions adopted for the jointed arms supporting the operating units, must store at the same time the "standard" pre-set position of the units overlaying that specific tree row with respect to the trunks, for ex. by means of control encoders. The automatic "retreat" and "repositioning" of the operating unit (RT and/or LF) object of the intervention is foreseen to take place preferably with adjustable delays, as they depend on: the reaction time of the retreat detection - execution system, the reciprocal position (distance) and the vehicle speed.

The choice of a neutral zone (ideal line deviation tolerance) depends on two factors: the fact that an obstacle considered in terms of trunk deviations or misalignments is dangerous only in case it may cause damages to the operating units and/or the trees and the fact that it is advisable not to keep sensors, electric valves or other connected devices under constant operation, which would result in overheating and mechanism wearing.

The device calls for the dynamic storage of a certain number of contact signals (RT and LF) for "screening" purposes: in fact, they enable the operator or the electronic control cabinet to detect either an obstacle (for ex. a misshapen trunk) resulting in a signal coming from a skidding of the vehicle, or a tree row width reduction resulting in a sequence of signals.

As to the equipment working in mode 2, i.e. two-row - mono-facial devices incorporating contact sensors of the vertical free roller type or lever type with end free small wheel, it is stressed here that, when adopting the lever solution, in case of frequent trunk misshapes, it is advisable to foresee two parallel levers at different heights from the ground.

In case of equipment working in mode 2 and close to the ground, such as hoeing, weeding and grass cutting - mulching units working at the tree row foot, the automatic unit "retreat", pre-set as proportional to the obstacle, can be achieved by placing a hydromatic stub pipe between the tool-holding head junction plate and the one of the operating unit, incorporating a hydraulic piston with pressure quick inversion valve controlled by the sensor either mechanically or by means of an electric valve, with no need for operator's action.

In case of adjustment of the device/s to the transversal, positive or negative inclination of the tree with respect to the strip between two tree rows, the sensors, fitted onto a dedicated tool-holding platform duly placed ahead of the one supporting the operating units, are double and arranged in a vertical row at pre-set distances (h) and detect first the presence of the tree row supporting poles, made of steel or reinforced concrete and placed every 4/7 meters and then the two distances from the post, i.e. d1 and d2 (above): if d1 = d2 the pole, and therefore the foliage, are considered as being vertical, if they differ, the electronic cabinet calculates the inclination percentage 1% = (d1-d2)/h x 100 and sends the relevant signal to the operator and/or the actuators, so as to make the operating units, even the tree row overlaying ones (for ex. trimmers, leaf strippers, sprayers), incline accordingly, so as to make them parallel to the foliage.

The device calls for the storage of the inclination data until receipt of a different signal, as well as for the respect of the combination between the inclination signal and the distance between the operating units and the trunks and the relation with possible programmed positions, such as foliage thickness and its possible misalignment with respect to the supporting poles.

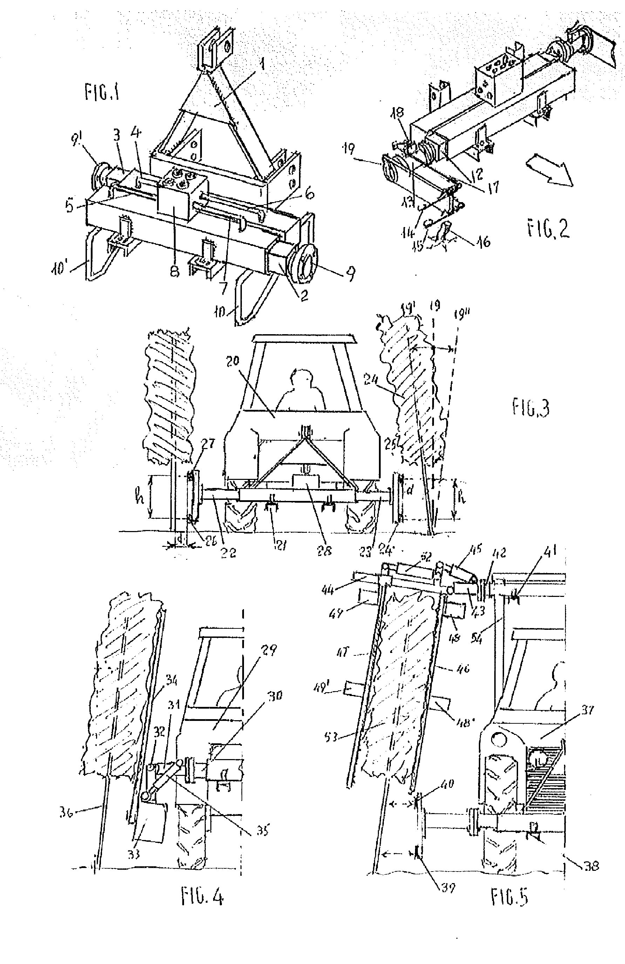

Figures 1 to 5 of the attached table can help experts in better understanding the main features of the invention, even if limited to schematic drawings of its possible applications.

Fig. 1 shows the basic (minimal) structure of the platform capable to be fitted onto a 3-points lifting group 1, the opposite and parallel double action hydraulic pistons 2 and 3 driving the transversal widening/approaching movements sliding along suitable guides and independently handled by the operator or by sensors, plus electronic cabinet. The figure also shows the piping 4,5 and 6,7 feeding the above hydraulic pistons and conveyed into the distributing box 8 equipped with quick connections to the hydraulic and/or electric circuits of the tractor, the standardized head plates 9 and 9' of the RT and LF pistons, onto which the distance side sensors and the RT and LF operating units are fixed, either directly or indirectly through the interposition of jointed arms supporting the same, or of retreat automatic devices and/or side sensors, which are not shown here, and the lower supports 10 and 10' for storage purposes. The box 8 gathers the delivery and return piping (D/R) and/or the electric cables feeding the units hydraulic or electric motors; the electronic cabinet, handling positions and functions, is housed in the same area or separately.

Fig. 2 shows a simplified view of the platform to be fitted onto a front lift with a couple of lever-type mechanic detectors 14 and 15 fixed onto small frames placed ahead of the operating units and an example of the interposition on the RT side of a hydraulic device 13 capable to rapidly adjust to temporary working width variations placed between the positioning double action hydraulic piston 12 and the RT operating unit, which is not shown here, fixed to the standardized plate 19. Figure 2 also shows that each compensator-type mechanic detector 14 and 15 ends with a free wheel, which, when hitting an obstacle such as item 16, bends and mechanically drives, by means of a tension rod such as item 17, the lever 18 controlling a hydraulic pressure inversion valve, possibly of an existing type, causing the quick retreat of the interposed double action piston 13 and therefore of the operating unit. The reset of the "standard" operating unit position takes place automatically thanks to the return of lever 14 and/or 15 determined by one or more springs, preferably of the needle-type, and delayed by a suitable and adjustable period of time.

Fig. 3 shows a schematic drawing of a tractor in the tree row with the platform 21 fitted onto its front lifting group and the hydraulic double action pistons 22 and 23 supporting on the RT side the couple of vertical sensors placed at different heights - h: the lower one 24, the upper one 25 suitable to measure the distance from the foliage supporting poles such as item 20 (20' and 20") at two different heights from the ground and the same sensors 26 and 27 on the LF side. The figure also shows the electronic cabinet 28, which calculates the inclination and provides signals to the operator and/or inputs to the actuators, which are not shown here, controlling the operating units positioning.

Fig. 4 shows a schematic view, on the left side only, of an example of jointed arm for the positioning of a mono-facial operating unit (a tree row inner side trimmer here); it shows the back of the tractor 29, the platform and the piston 30 controlling the unit transversal positioning, the jointed arm 31 with the hinge 32 and the inclinable equipment 33, incorporating an oleo-dynamic motor driving the alternating knife-type trimming bar 34, possibly of an existing type. The inclination double detectors are not shown here, but the figure shows the double action hydraulic piston 35 controlling the inclination of the bar 34 parallel to the foliage supporting pole 36.

Fig. 5 shows a schematic view, on the RT side only, of an example of the positioning mechanism of a bifacial trimming unit overlaying the RT side foliage. In this case too two too-holding platforms having different functions and placed at different heights are foreseen and fitted onto the tractor 37; the lower detection one 38 fitted onto a front lifting group with the couples of sensors 39 and 40 to detect the distance from the foliage supporting poles, such as item 50, and the upper one incorporating the various operating equipment 41, fitted behind onto a hydraulic lift 54; the figure shows the widening horizontal hydraulic piston 42, the extension stub pipe 43 fixed to the standardized platform, the jointed arms for the support and positioning of the tree row overlaying unit 44, capable to be inclined by means of the double action hydraulic piston 45, the inner and outer parallel and specular operating units 46 and 47, and a sketch of two rotating scissors trimmers driven by couples of oleo-dynamic motors, such as items 48, 48' and 49, 49'. The outer unit support bar 47 can slide linearly along the arm 44 thanks to the double action hydraulic piston 51, in order to obtain the requested foliage "thickness" 52. The platform described and shown above is placed in the "standard" position, whereas the distributing and connecting box to the operating units and the control cabinet can have different features depending both on the operations to be carried out and the requested automation level, but permits in any case to perform operations also with multi-functional and possibly variable combinations, so as to achieve a high working speed, reduce transits and trampling along the tree rows, as well as costs, and guarantee higher job precision, without overloading the operator's attention.

What has been described and shown above, though in a simple schematic way, is to be considered just an example of the invention and limited to the mechanic aspects of a standardized tool-holding platform suitable to support and bilaterally handle different operating units working in the tree row inner side or overlaying the same, as well as proximity sensors suitable to act on both sides of each tree row, in order to carry out operations at the foot and/or on the trunks and/or foliages of tree rows and hedges with either innovative equipment or of an existing type, regardless of the hydromatic and electronic detection, calculation and control devices adopted.

## Claims

1. Combined, bilateral, adjustable agricultural tool platform, which: can be fitted, directly or through a lifting device, on the rear or forward end of vehicles operating along the inter-row paths of vineyards, orchards, seedling-nurseries, and hedges; is suited to support, through combined connection plates, different working units operating on the ground, trunks or foliage, and maneuver said units by dynamically adjusting each unit's working width and transversal angle, according to need, by either manual operation or, preferably, integrated or substituted with sensor-activated automated controls, programmable logics, control units, data storage, through either hydraulic or electronic controls and operating systems; features at least the supporting frame and two opposite, horizontal hydraulic D.E. pistons, transversal to the working direction, independently operated to adjust working width; can be variously developed both in mechanics and automation to support position sensors and working units (also multifunction), either directly or interposed with automated elements and maneuvering devices, so to optimize working time and performance, and decrease operator intervention, rigging times and costs.

2. Combined, bilateral tool platform, as described in claim 1), suited for operation at ground level, featuring on each side a mechanical impact-sensor, preceding the working unit and suited, via a control panel, to alert the operator to both occasional and repeated impediments obstructing work on one or both sides, allowing the operator to timely adjust the unit's width to avoid the impediment and then reset it to the standard working width (which can be preset to avoid positioning errors), adjust the working width or differently assess the situation.

3. Combined, bilateral tool platform, as described in previous claims, particularly in claim 2), geared so that, once the standard working position (meant as the position allowing unaltered progress in the absence of obstacles) for each side is set, a mechanical/hydraulic/electronic device, positioned between the hydraulic D.E. piston and the working unit, will automatically and proportionally adjust the unit's width on receipt of the signal from the mechanical sensor, while the control panel will readjust it to the standard width, according to preprogrammed settings, so to decrease working time and operator involvement.

4. Combined, bilateral tool platform, as described in previous claims, with automated impediment-detection and width-adjusting device, featuring (especially for ground-level operations) preferably mechanical impediment-sensors on each side; each sensor basically comprises at least one first kind lever, suitably shaped for not spoiling vines and kept open by a spring which, on impact, closes proportionally to the impediment's width, and (mechanically, electronically or hydraulically) conveys the information to the width-control device fitted on the platform; conversely, the resetting to standard width depends on the impediment's and unit's respective shapes, and is controlled through either a simple calibrated brake, when possible, or suitable feelers, so to achieve, especially for hoeing units, geometrically correct working tracks.

5. Combined, bilateral tool platform, as described in previous claims, geared for interventions on the foliage, fitted with a suitable electronic control panel, featuring on each side pairs of vertical magnetic sensors suited to: detect the presence of foliage-supporting poles; and the same or others suited to measure the distance between each sensor and the pole it faces; calculate the supporting pole's transversal angle, if different, and duly signal it to the operator, thus enabling him to intervene manually during the operation, and perform a correct operation on the foliage.

6. Combined, bilateral tool platform, as described in previous claims, particularly in claim 5), supporting tools operating on one side of the foliage (such as shearing machines, leaves removers, sprayers), fitted to perform automated operations, and therefore featuring an electronic control panel which: calculates and memorizes transversal adjustments; transmits them to the hydraulic/electric working units; is equipped to survey the execution, so to automatically adjust each working unit's setting, according to need for a correct operation, maintaining the new setting until receipt of new input from the sensors, and thus decrease the operator's involvement.

7. Bilateral tool platform, as described in previous claims, particularly in claim 5) and 6), suitable to operate also directly with each working unit on the foliage's inner side, **characterized by** having each device hinged to the D.E. piston's head, which operates working-width adjustments, and can be transversally angled by an other, dedicated device, so to achieve a correct positioning in relation to the preset working-width as integrated by angle adjustments, managed by a suitable electronic control panel.

8. Bilateral tool platform, as described in previous claims, with impediment-sensors and signalers but suited to perform two-sided operations on the foliage, and therefore row-bestriding working, suited, through additional structures, to situate, support and manage on both rows, working-units adjustable in width, and cross wise; the device is adjustable in its working width (foliage dimensions) and, preferably, in its axis to the supporting poles; it is mounted through a suitable lifting device to a vehicle working in inter-row paths; feature D.E. hydraulic pistons that manage transversal variations and further device that manage variations of positioning, achieved through either independent D.E. hydraulic pistons or other equivalent mechanisms, either man-operated to increase productivity by performing simultaneously on two rows, or preferably automated and managed by sensors.

9. Bilateral, combined tool platform as described in previous claims, particularly in claim 8), with impediment-sensors, signalers and automation apparatus built in two dedicated bodies: the first, mounted on the fore part of the tractor vehicle with sensors, suited to signal and stream all data to an electronic processor (PLC or other) suite to calculate the required operation and issue operational commands to the second body (platform), fitted to the vehicle's rear lift and supporting the working units, suited to manage the actuators so to achieve faster and more precise operations without additional strain on the operator.

10. Combined, bilateral tool platform which: can be fitted either directly on the in-built lifting device of, or through a hydraulic lift to, the forward or back end or vehicles operating in the inter-row path of vineyards, orchards, seedling nurseries and hedges; can be built in separate dedicated bodies; is suited, directly or indirectly, to support and manage one-sided and two-sided working units performing, either separately or simultaneously, different operations aimed at the protection, fertilization and maintenance of the row's foot, trunk or foliage; can be dynamically adjusted to shifts in working-width and foliage angle; can be equipped to achieve different dedicated operating modes and automation levels, wholly or in part, mechanically or logically, as described, illustrated and claimed above, for the described aims.
